# EUROPÄISCHE PATENTSCHRIFT

(11) **EP 2 840 415 B1**
(45) Veröffentlichungstag und Bekanntmachung des Hinweises auf die Patenterteilung: **27.09.2017**
(21) Anmeldenummer: 13180949.3
(22) Anmeldetag: 20.08.2013
(51) Int. Cl.: G01S 19/25, G01S 19/42, G01S 5/02

(54) **Verfahren zum Feststellen einer Position eines mobilen Endgeräts**
Method for determining a position of a mobile terminal
Procédé pour déterminer la position d'un terminal mobile

(43) Veröffentlichungstag der Anmeldung: 25.02.2015
(73) Patentinhaber: Siemens Convergence Creators GmbH, 1210 Wien (AT)
(72) Erfinder: Schreiber, Gerald, 21465 Wentorf (DE)
(74) Vertreter: Maier, Daniel Oliver

(56) Entgegenhaltungen:
- WO-A1-96/35293
- WO-A1-02/071756
- WO-A2-03/024085
- US-A- 5 243 652
- US-A1- 2009 094 257
- US-B1- 6 810 527
- US-B1- 7 343 157

## Beschreibung

### Technisches Gebiet

Die vorliegende Erfindung betrifft ein Verfahren zum Feststellen einer Position eines mobilen Endgeräts während einer Nutzung eines Luftfahrzeugs, insbesondere eines Flugzeugs. Dabei sind Sendeeinrichtungen des mobilen Endgeräts zum Aufbau und zur Aufrechterhaltung einer Verbindung zu einem Funknetz im Luftfahrzeug deaktiviert. Das mobile Endgerät ist aber für einen Empfang und Auswertung von Navigationssatellitensignalen eines Navigationssatellitensystems eingerichtet.

### Stand der Technik

In Luftfahrzeugen, insbesondere Passagierflugzeugen, wird für eine Unterhaltung von Passagieren so genanntes Infotainment angeboten - d.h. Filme, Musik, Nachrichteninformationen, etc. Diese multimedialen Infotainment-Inhalte können beispielsweise den Passagieren während eines Fluges auf mobilen Endgeräten wie z.B. Tablet-PCs oder Smartphones zur Verfügung gestellt werden. Dabei werden von den Eigentümern der Rechte der Infotainment-Inhalte Nutzungsrechte an den Inhalten (z.B. Filmen, Musikstücken, etc.) üblicherweise nur für klar begrenzte Nutzungsräume vergeben. Diese Nutzungsräume können beispielsweise zeitlich (z.B. Zeitfenster), räumlich (z.B. Region, Sprache, etc.) und/oder situativ (z.B. für Kino, Home-TV, mobile Nutzung, Nutzung durch eine Luftlinie, etc.) eingeschränkt sein. Für die Infotainment-Inhalte zur Nutzung in einem Luftfahrzeug gibt es daher spezielle Nutzungsrechte wie z.B. das so genannte "Airline Hospitality Window", von welchen allerdings eine Nutzung dieser relativ neuen Infotainment-Inhalte während einer Nutzung eines Luftfahrzeugs bzw. eines Fluges verlangt wird.

Für die Nutzung von Infotainment-Inhalten in Luftfahrzeugen, insbesondere Passagierflugzeugen, sind verschiedene Varianten bekannt. Es besteht die Möglichkeit, dass mobile Endgeräte mit vorab geladenen Infotainment-Inhalten von der jeweiligen Betreiber-Fluglinie leihweise während eines Fluges an die Passagiere ausgegeben werden, oder dass mittels so genanntem Streaming von den Passagieren im Luftfahrzeug Infotainment-Inhalte auf eigene, mitgebrachte mobile Endgeräte von eine im Luftfahrzeug angebrachten Streaming-Server geladen werden können. Diese beiden Varianten benötigen allerdings eine entsprechende Infrastruktur und Logistik seitens der Betreiber-Luftlinie. Es muss eine entsprechende leistungsfähige und teure Infrastruktur (z.B. Server, mobile Endgeräte, etc.) im Flugzeug vorhanden sein, und es muss für aktuelle Infotainment-Inhalte diese Infrastruktur laufend aktualisiert werden, wobei z.B. eine große Anzahl an mobilen Endgeräten mit neuen Inhalten versehen oder eine große Datenmenge auf den Streaming-Server übertragen werden muss.

Die US 5 243 652 zeigt die geografische Medienfreigabe in einem Flugzeug, wobei die geografische Position über einen GPS-Empfang des Flugzeugs erreicht wird.

Es können die Infotainment-Inhalte auch vom jeweiligen Passagier bereits vor einer Nutzung eines Flugzeugs auf das jeweilige Passagier eigene, mobile Endgerät geladen werden. Dazu kann von einem Passagier zuvor der Infotainment-Inhalt selbst gekauft und auf seinem mobilen Endgerät gespeichert werden, wobei dazu kaum bis kein Inhalt aus dem so genannten "Airline Hospitality Window" angeboten wird, sondern z.B. allgemein erwerbbarer und z.B. via Internet oder spezielle Internetseiten verfügbarer Inhalt. Eine weitere Möglichkeit stellt aber auch ein so genannter zwischengespeicherter Infotainment-Inhalt dar. Dabei werden Infotainment-Inhalte beispielsweise vor der Nutzung des Luftfahrzeugs am Boden vom Passagier z.B. von einem Airline-betriebenen Server auf sein mobiles Endgerät geladen. Die Inhalte können dann zeitverzögert im Flugzeug angesehen werden. Allerdings kann bei dieser Variante der Infotainment-Inhalte-Nutzung das so genannte "Airline Hospitality Window" - eine Nutzung im Flugzeug - nur bedingt geprüft werden. Es ist zwar eine zeitliche Einschränkung der Nutzung der Inhalte überprüfbar, aber es kann keine regionale bzw. situative Nutzung der Inhalte bei einer Beschränkung der Nutzungsrechte auf ein Betrachten der Infotainmentinhalte während eines Fluges kontrolliert werden, da nicht feststellbar ist, ob sich das mobile Endgerät wirklich im Luftfahrzeug befindet. Deshalb werden beispielsweise dafür oft Nutzungsrechte für eine Inhaltsnutzung am Boden herangezogen, wodurch der verfügbare Inhalt nicht selten veraltert ist bzw. eine regionale Nutzungsbeschränkung aufweist.

Zwar weisen mobile Endgeräte wie z.B. Tablet-PC, Smartphones, etc. mittlerweile Einrichtungen und/oder Anwendungen zur Positionsbestimmung auf, aber diese können in einem Luftfahrzeug nur bedingt oder schlecht genutzt werden. Häufig wird für eine Positionsbestimmung eines mobilen Endgeräts wie z.B. von einem Mobiltelefon die Verbindung mit dem Funknetz herangezogen. Diese Verbindung ist allerdings in einem Luftfahrzeug aus Sicherheitsgründen deaktiviert. Moderne, mobile Endgeräte wie z.B. Tablet-PCs, Smartphones können für diese Deaktivierung in den so genannten Flugmodus geschaltet werden, bei welchem die Verbindung und Verbindungsaufnahme zu einem Funknetz unterbunden wird.

Diese modernen, mobilen Endgeräte, welche auch zum Abspielen von Infotainment-Inhalten genutzt werden können, weisen aber z.B. häufig eine Einrichtung und/oder Anwendung auf, mit welcher Satellitensignale eines globalen Navigationssatellitensystems empfangen und für eine Positionsbestimmung ausgewertet werden können. Bei einer satellitenbasierten Positionsbestimmung wie z.B. mittels GPS (Global Positioning System) ist es für eine dreidimensionale Positionsbestimmung des mobilen Endgeräts allerdings notwendig, dass eine Entfernung vom mobilen Endgerät zu mindestens vier sichtbaren Navigationssatelliten bestimmt wird. Die Entfernung zwischen dem jeweiligen Navigationssatelliten und dem mobilen Endgerät ergibt sich dann aus einer Signallaufzeit. Allerdings besteht in einem Luftfahrzeug üblicherweise aufgrund der schirmenden Wirkung der Flugzeughülle kein ausreichender Empfang von Navigationssatellitensignalen, um eine Positionsbestimmung des mobilen Endgeräts durchzuführen.

Mobilen Endgeräten wie z.B. Tablet-PC, Smartphones, etc. weisen auch häufig keinen vollständigen Empfänger für Navigationssatellitensignale oder GPS auf, sondern es wird ein als Assisted-GPS bezeichnetes Verfahren eingesetzt. Dabei werden vom mobilen Endgerät lediglich Laufzeitmessungen durch den Empfang sogenannter Pseudoranges zu mehreren Navigationssatelliten durchgeführt. Der Name Pseudoranges kommt daher, dass aufgrund einer begrenzten Länge der Sequenzen der Navigationssatellitensignale die Laufzeit zwischen den Navigationssatelliten und dem mobilen Endgerät nur Modulo 1ms bekannt ist. Zur Positionsbestimmung sind außer den Navigationssatellitensignalen noch weitere Informationen - sogenannte Hilfsdaten wie z.B. Navigations- bzw. Bahndaten der Satelliten - nötig, welche bei Assisted-GPS über das jeweilige Funknetz bzw. Funkkommunikationssystem zur Verfügung gestellt werden. In einem Flugzeug stehen diese Informationen allerdings nicht zur Verfügung, da keinen Verbindung zum Funknetz besteht bzw. diese Verbindung deaktiviert ist. Außerdem sind die Navigationssignale der Satelliten im Flugzeug stark gedämpft bzw. wird z.B. selten eine für einen Positionsbestimmung ausreichende Anzahl an Navigationssatellitensignalen empfangbar sein. Im besten Fall sind von einem Sitzplatz in unmittelbarer Nähe eines Flugzeugfensters verfügbar.

Als Plausibilisierung für eine anschließend getätigte Flugreise kann beispielsweise eine Positionsbestimmung an einem Abflughafen durchgeführt und herangezogen werden. Diese Vorgehensweise weist allerdings den Nachteil auf, dass die Positionsbestimmung für eine Prüfung für entsprechende Nutzungsrechte für Infotainment-Inhalte, welcher z.B. nur während eines Fluges genutzt werden darf, relativ unsicher und ungenau ist. Es kann zwar festgestellt werden, dass sich ein Passagier mit seinem mobilen Endgerät, auf welchem dieser speziell geschützte Inhalt genutzt werden soll, auf dem Abflughagen befindet, aber es wird nicht ausreichend geprüft, ob der entsprechende Flug auch genutzt wird.

Weitere Möglichkeiten zum Feststellen einer Position eines mobilen Endgeräts in einem Luftfahrzeug bzw. zu Prüfen, ob sich ein bestimmtes mobiles Endgerät in einem bestimmten Luftfahrzeug befindet, bestehen beispielsweise darin, im Luftfahrzeug Verstärkungseinrichtungen - so genannte Repeater - für Navigationssatellitensignale vorzusehen oder es werden im Flugzeug aktuelle Positionsdaten z.B. über Wireless LAN oder Bluetooth verbreitet. In beiden Fälle ist im Flugzeug eine eigene, meist kostspielige Infrastruktur anzubringen, damit die Positionsdaten zur Verfügung gestellt werden können. Insbesondere bei einem Einsatz von Repeatern für die Navigationssatellitensignale sind spezielle und kostenintensive Vorkehrungen zu treffen, da Navigationssatellitensignale einen hohe Relevanz für die Flugsicherheit haben und daher Störungen verhindert werden müssen.

### Darstellung der Erfindung

Der Erfindung liegt daher die Aufgabe zugrunde, ein Verfahren zum Feststellen einer aktuellen Position eines mobilen Endgeräts während der Nutzung eines Flugzeugs anzugeben, mit welchem auf einfache und sichere Weise und ohne zusätzlichem Aufwand eine hinreichend genaue Positionsbestimmung des mobilen Endgeräts durchgeführt werden kann, und mit welchem sehr einfach festgestellt werden kann, ob ein mobiles Endgerät an Bord eines Flugzeugs ist.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem vor der Nutzung des Luftfahrzeugs Bahndaten von Navigationssatelliten eines globalen Navigationssatellitensystems auf das mobile Endgerät geladen werden. Dann wird bei oder während der Nutzung des Luftfahrzeugs von einer am mobilen Endgerät installierten Anwendung eine aktuelle Uhrzeit, eine aktuelle Flugroute des Luftfahrzeugs sowie Positionen der Navigationssatelliten, welche anhand der Bahndaten der Navigationssatelliten bestimmt werden, korreliert. Aus einem Ergebnis der Korrelation wird dann eine Position des mobilen Endgeräts abgeleitet und mit einer relativ guten Wahrscheinlichkeit festgestellt, ob sich das mobile Endgerät im Luftfahrzeug befindet oder nicht.

Der Hauptaspekt des erfindungsgemäßen Verfahrens besteht drin, dass auf einfache Weise und beispielsweise ohne aufwendige und kostenintensive Installation einer entsprechenden Infrastruktur in einem Luftfahrzeug während eines Fluges eine Position eines mobilen Endgeräts mit Hilfe einer in diesem Endgerät eingebauten Einrichtung zum Empfang von Navigationssatellitensignalen annähernd bestimmt werden kann. Es kann auf diese Weise sehr einfach festgestellt werden, ob sich das mobile Endgerät an Bord eines Flugzeugs befindet oder nicht. Mittels Einsatz einer Korrelation von der Flugroute, der Uhrzeit mit einer Sichtbarkeit von Navigationssatelliten bzw. einer Empfangbarkeit der von ihnen ausgesendeten Navigationssatellitensignalen kann sehr einfach eine Wahrscheinlichkeit für einen Aufenthalt des mobilen Endgeräts im entsprechenden Luftfahrzeug entscheiden werden. Anhand der Bahndaten der Navigationssatelliten können die an der angenommen Position auf der Flugroute empfangbaren - d.h. sichtbaren - Navigationssatelliten bestimmt werden. Dies erlaubt eine negative Korrelation - d.h. es wird dann durch einen Vergleich mit den tatsächlich vom mobilen Endgerät empfangenen Navigationssatellitensignalen festgestellt, ob alle oder zumindest ein Großteil der an der angenommenen Position auf der Flugroute empfangbaren bzw. sichtbaren Navigationssatelliten auch tatsächlich empfangen wird. Dieses Ergebnis kann dann beispielsweise für einen Zugang zu neuen und aktuellen Infotainment-Inhalten, deren Nutzung mittels entsprechender Nutzungsrechte ("Airline Hospitality Window") eingeschränkt sind, eingesetzt werden.

Weiterhin können zusätzlich oder alternativ bei der Nutzung des Luftfahrzeugs von der Anwendung am mobilen Endgerät für eine Korrelation mit der Flugroute und der Uhrzeit, von welchen eine angenommene Position des Luftfahrzeugs geliefert wird, nur die vom mobilen Endgerät empfangenen Navigationssatellitensignale herangezogen werden. Auf diese einfache Weise wird vorteilhaft eine positive Korrelation ermöglicht und eine Wahrscheinlichkeit ermittelt werden, mit welcher der oder die tatsächliche empfangenen Navigationssatellitensignale zur angenommenen Position auf der Flugroute passen. Das Ergebnis dieser Korrelation kann dann ebenfalls für einen Zugang zu neuen und aktuellen Infotainment-Inhalten, deren Nutzung mittels entsprechender Nutzungsrechte ("Airline Hospitality Window") eingeschränkt sind, verwendet werden.

Es ist dabei vorteilhaft, wenn für eine Ermittlung der aktuellen Flugroute ein Nutzungsnachweis für das Luftfahrzeug, insbesondere ein Boarding Pass, herangezogen wird. Derartige Nutzungsnachweise wie z.B. Boarding Passes weisen üblicherweise einen Barcode auf, welcher beispielsweise vor oder auch während des Flugs mit Hilfe des mobilen Endgeräts eingescannt und ausgewertet werden kann. Aus den Daten wie z.B. Flugnummer und Datum des Nutzungsnachweises kann dann sehr einfach die aktuelle Flugroute des benutzten Luftfahrzeugs ermittelt werden. So kann beispielsweise vor dem Flug anhand von Datum und Flugnummer die Flugroute auf das mobile Endgerät geladen werden. Dazu kann z.B. ein Dienst wie FlightRadar24 genutzt werden.

Alternativ kann es auch günstig sein, wenn für die Ermittlung der aktuellen Flugroute vor der Nutzung des Luftfahrzeugs zumindest eine z.B. regionale Auswahl an Flugrouten oder gegebenenfalls auch alle verfügbaren Flugrouten auf das mobile Endgerät geladen werden. In diesem Fall kann dann idealer Weise der Nutzungsnachweis bzw. Boarding Pass während des Fluges mit Hilfe des mobilen Endgeräts eingelesen und ausgewertet werden. Es wird dann beispielsweise anhand der Flugnummer und des Datums aus dem Nutzungsnachweis bzw. Boarding Pass die aktuelle Flugroute aus den vorab auf das mobile Endgerät geladenen Flugrouten bestimmt und für die Korrelation genutzt.

Bei einer vorteilhaften Fortbildung des erfindungsgemäßen Verfahrens wird eine Dämpfungscharakteristik eines jeweiligen Luftfahrzeugtyps modelliert. Diese Dämpfungscharakteristik wird dann mit den empfangbaren ermittelten Navigationssatelliten korreliert. Mit Hilfe der modellierten Dämpfungscharakteristik können die empfangbaren bzw. sichtbaren Satelliten bzw. die aktuellen Positionen dieser Navigationssatelliten besser bestimmt werden. So kann z.B. angenommen werden, dass Navigationssatelliten kurz über dem Horizont links oder rechts zur Flugrichtung des Flugzeugs eher sichtbar bzw. deren Navigationssatellitensignale leichter empfangbar sind als Satelliten in Vor- oder Rückrichtung oder im Zenit. Durch die Korrelation mit der Dämpfungscharakteristik kann beispielsweise die Feststellung einer ungefähren Position des mobilen Endgeräts einfacher und rascher durchgeführt werden.

Weiterhin ist es günstig, wenn mit den vom mobilen Endgerät empfangenen Navigationssatellitensignalen eine Dopplerverschiebung der vom mobilen Endgerät empfangenen Navigationssatellitensignale mit einer Geschwindigkeit und Richtung des Luftfahrzeugs berücksichtigt und korreliert wird. Auf diese Weise kann sehr einfach einen Bewegung wie die Bewegungsrichtung bei der Positionsbestimmung berücksichtigt werden. Eventuell durch die Bewegung bzw. die Geschwindigkeit des Flugzeugs auftretende Fehler z.B. in den vom mobilen Endgerät empfangenen Navigationssatellitensignalen oder den aktuellen Positionen der Navigationssatelliten werden damit berücksichtigt.

Des Weiteren empfiehlt es sich, wenn ein Ergebnis des Vergleichs aus den empfangbaren Navigationssatelliten und aus den vom mobilen Endgerät tatsächlich empfangenen Navigationssatellitensignalen oder ein Ergebnis der Korrelation der Flugroute, der aktuellen Uhrzeit mit den tatsächlich empfangenen Navigationssatellitensignalen für eine Berechtigung zur Nutzung von multimedialen Inhalten am mobilen Endgerät herangezogen wird. Durch die Positionsbestimmung des mobilen Endgeräts gemäß dem erfindungsgemäßen Verfahrens kann auf sehr einfach festgestellt werden, ob das mobile Endgerät sich im Flugzeug befindet. Damit kann sehr einfach eine Lokalität - wie z.B. im Flugzeug - für die Betrachtung des Infotainment-Inhalts sichergestellt werden. Es werden damit sehr leicht sichergestellt, dass Infotainment-Inhalte, welche z.B. für ein so genanntes "Airline Hospitality Window" zur Verfügung gestellt worden sind, nur entsprechend dieser Nutzungsrechte auf dem mobilen Endgerät betrachtet, wiedergegeben, etc. werden. Damit wird auf einfache Weise die Einhaltung der Nutzungsrechte für neue Infotainment-Inhalte eingehalten.

Es ist auch vorteilhaft, wenn als Navigationssatellitensystem das so genannte Global Positioning System oder GPS verwendet wird. GPS ist ein globales Navigationssatellitensystem, welche zur Positions- und Zeitmessung eingesetzt wird. GPS hat den Vorteil, dass GPS-Geräte bzw. Gerät, welche für den Empfang von GPS-Signalen eingerichtet sind, nur Signale empfangen. GPS basiert dabei auf Satelliten, von welchen mit kodierten Radiosignalen ständig ihre aktuelle Position sowie die genaue Uhrzeit ausgestrahlt werden. Aus der Signallaufzeit können dann die jeweiligen GPS-Empfänger ihre eigene Position und gegebenenfalls Geschwindigkeit ermitteln. Weiterhin weist GPS ein weltweit nutzbares Navigationssatellitennetz auf und hat daher als das weltweit wichtigste Ortungsverfahren mit einer weitverbreiteten Nutzung etabliert.

Als mobile Endgeräte werden idealer Weise so genannte Tablet-PCs oder so genannte Smartphones eingesetzt. Auf diesen mobilen Endgeräten kann sehr einfach eine Anwendung für einen Korrelation von Uhrzeit, Flugroute und Positionsdaten von Navigationsatelliten installiert werden. Weiterhin werden diese mobilen Endgerät häufig für eine Wiedergabe von multimedialen Inhalten genutzt und weisen sowohl die Möglichkeit einer Deaktivierung der Verbindung mit einem Funknetz - den so genannten Flugmodus - auf, ohne dass das mobile Endgerät ausgeschaltet werden muss, bzw. sind diese mobilen Endgeräte mittlerweile für einen Empfang von Navigationsatellitensignalen, insbesondere mittels GPS und/oder Assisted-GPS, eingerichtet.

### Kurzbeschreibung der Zeichnung

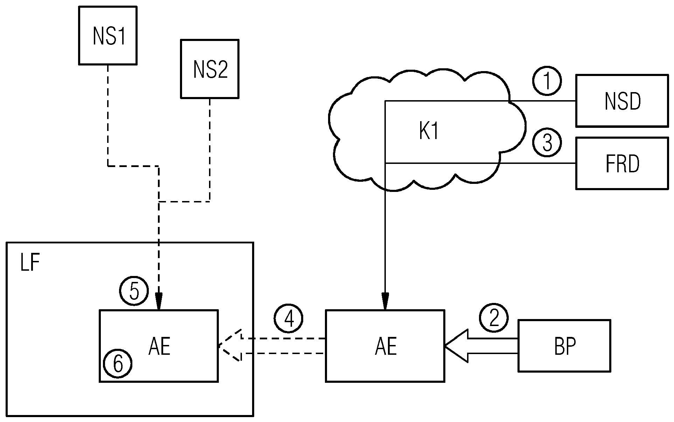

Die Erfindung wird nachfolgend in beispielhafter Weise anhand der beigefügten Figur erläutert. Figur 1 zeigt dabei schematisch einen beispielhaften Ablauf des erfindungsgemäßen Verfahrens zum Feststellen einer Position eines mobilen Endgeräts während einer Nutzung eines Luftfahrzeugs, insbesondere eines Flugzeugs.

### Ausführung der Erfindung

Figur 1 zeigt in schematischer Weise einen beispielhaften Ablauf des erfindungsgemäßen Verfahrens zur Positionsbestimmung eines mobilen Endgeräts AE wie z.B. Tablet-PC, Smartphone, etc. während eines Fluges mit einem Luftfahrzeug LF, insbesondere Flugzeugs. Das mobile Endgerät AE ist dabei zum Empfang von Navigationssatellitensignalen eines Navigationssatellitensystems wie z.B. GPS, etc. eingerichtet. Das bedeutet, das mobile Endgerät AE weist dazu z.B. einen GPS-Empfänger auf oder ist für das so genannte Assisted-GPS eingerichtet. Diese Funktionalität wird heutzutage beispielsweise von Smartphones, Tablet-PCs, etc. zur Verfügung gestellt. Diese mobilen Endgeräte AE sind weiterhin zum Abspielen von Infotainment-Inhalten bzw. von multimedialen Inhalten wie z.B. Video- und/oder Audiodateien, Videostreams, etc. geeignet.

Beim erfindungsgemäßen Verfahren wird vor der Nutzung des Luftfahrzeugs LF am Boden oder vor Antritt des Fluges in einem ersten Verfahrensschritt 1 über ein Kommunikationsnetz K1 wie z.B. über das Internet bei bestehender Konvektivität Bahndaten NSD von Navigationssatelliten NS1, NS2 auf das mobile Endgerät AE geladen. Zu diesem Zeitpunkt muss das mobile Endgerät AE noch nicht in den so genannten Flugmodus geschaltet sein, d.h. die Sendeeinrichtungen des mobilen Endgeräts AE sind noch nicht deaktiviert.

Weiterhin kann in einem zweiten Verfahrensschritt 2 ein Nutzungsnachweis BP - z.B. kurz vor Antritt eines Fluges - ausgewertet werden, um einen geplante Flugroute zu bestimmen. Dazu kann beispielsweise ein Barcode auf einem Boarding Pass BP mit dem mobilen Endgerät AE eingescannt und dann ausgewertet werden, um einen Flugnummer und ein Datum zu ermitteln. Mit diesen Daten kann dann in einem dritten Verfahrensschritt 3 eine Flugroute FRD des geplanten Flugs über das Kommunikationsnetz K1 auf das mobile Endgerät AE geladen werden. Diese Funktionalität wird z.B. über Dienste wie FlightRadar24 zur Verfügung gestellt.

Alternativ kann eine Auswertung des Nutzungsnachweises bzw. des Boarding Passes BP mit dem mobilen Endgerät AE auch erst während des Flugs - d.h. erst an Bord des Luftfahrzeugs LF - erfolgen. Das bedeutet, dass der zweite Verfahrensschritt 2 erst an Bord des Luftfahrzeugs LF durchgeführt wird. Da das mobile Endgerät AE an Bord des Luftfahrzeugs bzw. während des Flugs in den so genannten Flugmodus zu schalten ist bzw. die Sendeeinrichtungen des mobilen Endgeräts AE deaktiviert sein müssen und damit keine Verbindung mehr zum Kommunikationsnetz K1 besteht, muss der dritten Verfahrensschritt 3 vorgezogen werden und es werden im dritten Verfahrensschritt 3 entweder alle verfügbaren Flugroutendaten FRD oder eine regionale Auswahl an Flugroutendaten FRD auf das mobile Endgerät geladen. Auch dafür können beispielsweise Dienste wie FlightRadar24 genutzt werden.

In einem vierten Verfahrensschritt 4 wird dann vom Passagier der geplante Flug angetreten und damit das mobile Endgerät AE an Bord des Luftfahrzeugs LF gebracht. Bei Benutzung des Luftfahrzeugs LF bzw. während des Flugs müssen die Sendeinrichtungen des mobilen Endgeräts AE deaktiviert sein bzw. das mobile Endgerät AE muss in den so genannten Flugmodus geschaltet werden.

Wurde der Benutzungsnachweis bzw. der Boarding Pass BP für eine Bestimmung der Flugroute FRD nicht bereits am Boden ausgewertet und damit die aktuelle Flugroute FRD ermittelt, so muss nun der zweite Verfahrensschritt 2 nachgeholt werden. Es wird dann z.B. der Barcode des Boarding Passes BP eingescannt und ausgewertet. Aus der ermittelten Flugnummer und dem Datum kann dann aus dem in dritten Verfahrensschritt 3 am Boden auf das mobile Endgerät AE geladenen Flugrouten FRD die aktuelle Flugroute FRD bestimmt werden. Nachdem die aktuelle Flugroute FRD bekannt ist, können in einem fünften Verfahrensschritt 5 die aktuelle Flugroute FRD, eine aktuelle Uhrzeit und anhand der Bahndaten NSD der Navigationssatelliten NS1, NS2 Positionen dieser Navigationssatelliten NS1, NS2 durch einen Anwendung am mobilen Endgerät AE korreliert werden. Aus dem Ergebnis dieser Korrelation werden dann für die aktuelle Uhrzeit und für eine anhand der Flugroute FRD und der aktuellen Uhrzeit angenommene Position auf der Flugroute FRD empfangbare Navigationssatelliten NS1, NS2 ermittelt. In Figur 1 sind beispielhaft zwei Satelliten NS1, NS2 als empfangbar bzw. als für das im Luftfahrzeug LF befindliche mobile Endgerät AE sichtbar dargestellt. Es können aber auch mehr Navigationssatelliten NS1, NS2 als empfangbar ermittelt werden.

Im sechsten Verfahrensschritt 6 werden dann die als empfangbar ermittelten Navigationssatelliten NS1, NS2 mit den tatsächlich vom mobilen Endgerät AE im Luftfahrzeug LF empfangenen Navigationssatellitensignalen verglichen. Da von diese Signale üblicherweise eine Identifikation des jeweiligen Satelliten NS1, NS2 sowie ein aktuelle Position des jeweiligen Satelliten NS1, NS2 beinhaltet wird, kann dieser Vergleich sehr einfach am mobilen Endgerät AE durchgeführt werden. Aus dem Verglich kann dann abgeleitet werden, mit welcher Wahrscheinlichkeit sich das mobile Endgerät AE im Luftfahrzeug LF befindet oder nicht. Es wird dadurch beispielsweise eine negative Korrelation hergestellt und geprüft, ob alle oder zumindest ein Großteil der Navigationssatelliten NS1, NS2 vom mobilen Endgerät AE empfangen werden, welche an der angenommenen Position des Luftfahrzeugs LF auf der Flugroute FRD als empfangbar identifiziert worden sind.

Alternativ oder zusätzlich kann im fünften Verfahrensschritt 5 auch eine Korrelation der vom mobilen Endgerät AE tatsächlich empfangenen Navigationssatellitensignale für eine Korrelation mit der aktuellen Uhrzeit und der Flugroute FRD des Luftfahrzeugs LF von der Anwendung am mobilen Endgerät AE herangezogen werden. Die Verwendung der aktuell vom mobilen Endgerät AE empfangenen Navigationsdaten der Navigationssatelliten NS1, NS2 alleine ermöglicht beispielsweise eine positive Korrelation, die im sechsten Verfahrensschritt 6 ausgewertet werden kann. Bei dieser Auswertung wird dann geprüft, ob die empfangenen Navigationssatellitendaten zur angenommenen Position des Luftfahrzeugs LF auf der Flugroute FRD passen oder nicht. Daraus kann dann ebenfalls mit guter Wahrscheinlichkeit abgeleitet werden, ob sich das mobile Endgerät AE im Luftfahrzeug LF befindet oder nicht.

Für eine Verbesserung der jeweiligen Korrelationsergebnisse - entweder auf Basis der aktuell vom mobilen Endgerät AE empfangenen Navigationssatellitendaten oder dem Vergleich von empfangbaren Navigationssatelliten NS1, NS2 mit den vom mobilen Endgerät AE empfangenen Navigationssatellitendaten kann beispielsweise im fünften Verfahrensschritt 5 eine Dämpfungscharakteristik des genutzten Luftfahrzeugtyps modelliert werden und diese Dämpfungscharakteristik mit den empfangbaren Navigationssatelliten NS1, NS2 korreliert werden, um die empfangbaren bzw. sichtbaren Satelliten NS1, NS2 besser und leichte bestimmen zu können.

Weiterhin kann für den fünften und/oder sechsten Verfahrensschritt 5, 6 eine Dopplerverschiebung im Navigationssatellitensignal berücksichtigt werden und mit einer bekannten Geschwindigkeit und Richtung des Luftfahrzeug LF korreliert werden.

Im sechsten Verfahrensschritt 6 kann dann auch das Ergebnis des Vergleichs aus den empfangbaren Navigationssatelliten NS1, NS2 und aus den vom mobilen Endgerät AE empfangenen Navigationssatellitensignalen für eine Berechtigung zur Nutzung von multimedialen Inhalten - so genannten Infotainment-Inhalten - herangezogen werden. Alternativ oder gegebenenfalls ergänzend kann auch das Ergebnis aus der Korrelation der Flugroute FRD, der aktuellen Uhrzeit und der vom mobilen Endgerät AE tatsächlich empfangenen Navigationssatellitensignale zum Bestimmen einer Berechtigung zur Nutzung von multimedialen Inhalten benutzt werden. Damit wird sicher gestellt, dass z.B. auf eine Verwendung im Luftfahrzeug LF eingeschränkte Nutzungsrechte eingehalten werden. Mit dem erfindungsgemäßen Verfahren kann mit hoher Wahrscheinlichkeit festgestellt werden, ob sich das mobile Endgerät AE tatsächlich im Luftfahrzeug LF befindet und damit für die Nutzung der multimedialen Inhalte berechtigt ist.

## Patentansprüche

1. Verfahren zum Feststellen einer Position eines mobilen Endgeräts (AE) während einer Nutzung eines Luftfahrzeugs (LF), insbesondere eines Flugzeugs, wobei Sendeeinrichtungen des mobilen Endgeräts (AE) im Luftfahrzeug (LF) deaktiviert sind, und wobei das mobile Endgerät (AE) zum Empfang von Navigationssatellitensignalen eines Navigationssatellitensystems eingerichtet ist, **dadurch gekennzeichnet, dass** vor der Nutzung des Luftfahrzeugs (LF) Bahndaten (NSD) von Navigationssatelliten (NS1, NS2) des Navigationssatellitensystems auf das mobile Endgerät (AE) geladen werden (1), dass bei der Nutzung des Luftfahrzeugs (LF) von einer Anwendung am mobilen Endgerät (AE) eine aktuelle Uhrzeit, eine Flugroute (FRD) des Luftfahrzeugs (LF) und anhand der Bahndaten (NSD) der Navigationssatelliten (NS1, NS2) Positionen der Navigationssatelliten (NS1, NS2) korreliert werden (5), dass daraus für die aktuelle Uhrzeit empfangbare Navigationssatelliten (NS1, NS2) ermittelt werden (5), und dass dann die empfangbaren Navigationssatelliten (NS1, NS2) mit tatsächlich vom mobilen Endgerät (AE) empfangenen Navigationssatellitensignalen verglichen werden (6).

2. Verfahren nach Anspruch 1, **dadurch gekennzeichnet, dass** weiterhin bei der Nutzung des Luftfahrzeugs (LF) die vom mobilen Endgerät (AE) tatsächlich empfangenen Navigationssatellitensignale für eine Korrelation mit der aktuellen Uhrzeit und der Flugroute (FRD) des Luftfahrzeugs (LF) von der Anwendung am mobilen Endgerät (AE) herangezogen werden (5).

3. Verfahren nach einem der Ansprüche 1 bis 2, **dadurch gekennzeichnet, dass** für eine Ermittlung der Flugroute (FRD) ein Nutzungsnachweis (BP) für das Luftfahrzeug (LF), insbesondere ein Bording-Pass, vom mobilen Endgerät (AE) eingelesen und ausgewertet wird (2, 3).

4. Verfahren nach einem der Ansprüche 1 bis 3, **dadurch gekennzeichnet, dass** für eine Ermittlung der Flugroute vor der Nutzung des Luftfahrzeugs (LF) zumindest eine Flugroute (FRD) oder eine Auswahl an Flugrouten (FRD) auf das mobile Endgerät geladen wird (3).

5. Verfahren nach einem der Ansprüche 1 bis 4, **dadurch gekennzeichnet, dass** eine Dämpfungscharakteristik eines jeweiligen Luftfahrzeugtyps modelliert wird, und dann diese Dämpfungscharakteristik mit den als empfangbar ermittelten Navigationssatelliten (NS1, NS2) korreliert wird (5).

6. Verfahren nach einem der Ansprüche 1 bis 5 **dadurch gekennzeichnet, dass** mit den vom mobilen Endgerät (AE) empfangenen Navigationssatellitensignalen eine Dopplerverschiebung der vom mobilen Endgerät (AE) empfangenen Navigationssatellitensignale mit einer Geschwindigkeit und Richtung des Luftfahrzeugs (LF) berücksichtigt und korreliert wird (5).

7. Verfahren nach einem der Ansprüche 1 bis 6, **dadurch gekennzeichnet, dass** ein Ergebnis des Vergleichs aus den empfangbaren Navigationssatelliten (NS1, NS2) und aus den vom mobilen Endgerät (AE) empfangenen Navigationssatellitensignalen oder ein Ergebnis der Korrelation der Flugroute (FRD), der aktuellen Uhrzeit mit den tatsächlich empfangenen Navigationssatellitensignalen für eine Berechtigung zur Nutzung von multimedialen Inhalten am mobilen Endgerät (AE) herangezogen wird (6).

8. Verfahren nach einem der Ansprüche 1 bis 7, **dadurch gekennzeichnet, dass** als Navigationssatellitensystem das so genannte Global Positioning System oder GPS verwendet wird.

9. Verfahren nach einem der Ansprüche 1 bis 8, **dadurch gekennzeichnet, dass** als mobiles Endgerät (AE) ein so genannter Tablet-PC oder ein so genanntes Smartphone eingesetzt wird.

## Claims

1. Method for determining a position of a mobile terminal (AE) while using an aircraft (LF), in particular an aeroplane, wherein transmission facilities of the mobile terminal (AE) are deactivated in the aircraft (LF), and wherein the mobile terminal (AE) is equipped to receive navigation satellite signals of a navigation satellite system, **characterised in that** orbital data (NSD) for navigation satellites (NS1, NS2) of the navigation satellite system is loaded (1) onto the mobile terminal (AE) before using the aircraft (LF), that while using the aircraft (LF) an application on the mobile terminal (AE) correlates (5) a current time, a flight route (FRD) of the aircraft (LF), and positions of the navigation satellites (NS1, NS2) as determined with reference to the orbital data (NSD) of the navigation satellites (NS1, NS2), that navigation satellites (NS1, NS2) receivable at the current time are determined (5) therefrom, and that the receivable navigation satellites (NS1, NS2) are then compared (6) with navigation satellite signals actually received by the mobile terminal (AE).

2. Method according to claim 1, **characterised in that** furthermore while using the aircraft (LF) the navigation satellite signals actually received by the mobile terminal (AE) are used (5) by the application on the mobile terminal (AE) for the purpose of correlation with the current time and the flight route (FRD) of the aircraft (LF).

3. Method according to one of claims 1 to 2, **characterised in that** a proof of use (BP) for the aircraft (LF), in particular a boarding pass, is read and analysed (2, 3) by the mobile terminal (AE) for the purpose of identifying the flight route (FRD).

4. Method according to one of claims 1 to 3, **characterised in that** before using the aircraft (LF) at least one flight route (FRD) or a selection of flight routes (FRD) is loaded (3) onto the mobile terminal for the purpose of identifying the flight route.

5. Method according to one of claims 1 to 4, **characterised in that** an attenuation characteristic of a respective aircraft type is modelled and this attenuation characteristic is then correlated (5) with the navigation satellites (NS1, NS2) identified as receivable.

6. Method according to one of claims 1 to 5, **characterised in that** using the navigation satellite signals received by the mobile terminal (AE), a Doppler shift of the navigation satellite signals received by the mobile terminal (AE) is taken into consideration and correlated (5) with a speed and direction of the aircraft (LF).

7. Method according to one of claims 1 to 6, **characterised in that** a result of the comparison between the receivable navigation satellites (NS1, NS2) and the navigation satellite signals received by the mobile terminal (AE), or a result of the correlation of the flight route (FRD) and the current time with the navigation satellite signals actually received, is applied (6) for the purpose of authorising the use of multimedia content on the mobile terminal (AE).

8. Method according to one of claims 1 to 7, **characterised in that** the so-called Global Positioning System or GPS is used as a navigation satellite system.

9. Method according to one of claims 1 to 8, **characterised in that** a so-called tablet PC or a so-called smartphone is used as a mobile terminal (AE).

## Revendications

1. Procédé pour déterminer une position d'un terminal mobile (AE) pendant une utilisation d'un aéronef (LF), en particulier d'un avion, des dispositifs émetteurs du terminal mobile (AE) de l'aéronef (LF) étant désactivés et le terminal mobile (AE) étant configuré pour recevoir des signaux de satellite de navigation d'un système de satellite de navigation, **caractérisé en ce que**, avant l'utilisation de l'aéronef (LF), des données de trajectoire (NSD) de satellites de navigation (NS1, NS2) du système de satellite de navigation sont chargées (1) sur le terminal mobile (AE), **en ce que**, lors de l'utilisation de l'aéronef (LF), une heure actuelle, un itinéraire de vol (FRD) de l'aéronef (LF) et, à l'aide des données de trajectoire (NSD) des satellites de navigation (NS1, NS2), des positions des satellites de navigation (NS1, NS2) sont corrélés (5) par une application du terminal mobile (AE), **en ce que**, sur cette base, des satellites de navigation (NS1, NS2) pouvant être reçus pour l'heure actuelle sont déterminés (5) et **en ce que** les satellites de navigation (NS1, NS2) pouvant être reçus sont alors comparés (6) avec des signaux de satellite de navigation effectivement reçus par le terminal mobile (AE).

2. Procédé selon la revendication 1, **caractérisé en ce que**, en outre, lors de l'utilisation de l'aéronef (LF), les signaux de satellite de navigation effectivement reçus par le terminal mobile (AE) sont utilisés (5) par l'application du terminal mobile (AE) pour une corrélation avec l'heure actuelle et l'itinéraire de vol (FRD) de l'aéronef (LF).

3. Procédé selon l'une des revendications 1 à 2, **caractérisé en ce que**, pour déterminer l'itinéraire de vol (FRD), une preuve d'utilisation (BP) de l'aéronef (LF), en particulier une carte d'embarquement, est lue et analysée (2, 3) par le terminal mobile (AE).

4. Procédé selon l'une des revendications 1 à 3, **caractérisé en ce que**, pour déterminer l'itinéraire de vol avant l'utilisation de l'aéronef (LF), au moins un itinéraire de vol (FRD) ou une sélection d'itinéraires de vol (FRD) sont chargés sur le terminal mobile (3).

5. Procédé selon l'une des revendications 1 à 4, **caractérisé en ce qu'**une caractéristique d'atténuation d'un type d'aéronef respectif est modélisée et **en ce que** cette caractéristique d'atténuation est ensuite corrélée (5) avec les satellites de navigation (NS1, NS2) déterminés comme pouvant être reçus.

6. Procédé selon l'une des revendications 1 à 5 **caractérisé en ce que**, avec les signaux de satellite de navigation reçus par le terminal mobile (AE), un décalage Doppler des signaux de satellite de navigation reçus par le terminal mobile (AE) est pris en compte et corrélé (5) avec une vitesse et une direction de l'aéronef (LF).

7. Procédé selon l'une des revendications 1 à 6, **caractérisé en ce qu'**un résultat de la comparaison des satellites de navigation pouvant être reçus (NS1, NS2) et des signaux de satellite de navigation reçus par le terminal mobile (AE) ou un résultat de la corrélation de l'itinéraire de vol (FRD), de l'heure actuelle avec les signaux de satellite de navigation effectivement reçus est utilisé (6) pour autoriser l'utilisation de contenus multimédias sur le terminal mobile (AE).

8. Procédé selon l'une des revendications 1 à 7, **caractérisé en ce qu'**est utilisé, en tant que système de satellite de navigation, le système appelé Global Positioning System ou GPS.

9. Procédé selon l'une des revendications 1 à 8, **caractérisé en ce qu'**est utilisé, en tant que terminal mobile (AE), ce qu'il est convenu d'appeler une tablette PC ou un Smartphone.
